# EUROPEAN PATENT APPLICATION

(11) **EP 1 908 509 A1**
(43) Date of publication of application: **09.04.2008**
(21) Application number: 06425677.9
(22) Date of filing: 03.10.2006
(51) Int. Cl.: B01D 63/02, B01D 65/02, A61M 1/14, A61M 1/34

(54) **A process for producing exchange devices for medical use and exchange device produced thereby**

(71) Applicant: Sorin Group Italia S.r.l., 41037 Mirandola (MO) (IT)
(72) Inventor: Atti, Mauro, 41037 Mirandola (Modena) (IT)
(74) Representative: Bosotti, Luciano

(57) **Abstract**

An exchange device for medical use, such as a dialyser, comprises a bundle of hollow exchange fibres (12), arranged in a housing (14) that receives the fibres (12), defining a first flow path for a first fluid, such as blood, which can flow within the fibres, and a second flow path on the outside of the fibres for a second fluid, such as a dialysis bath. The ends of the fibres (12) are incorporated in potting masses (16) that co-operate with the housing (14) for separating from one another in a sealed way the paths of flow of the blood and of the dialysis bath. Associated to the potting masses (16) are seals (26) having a branch (26b) co-operating the respective potting mass (16). The potting mass (16) has for this purpose a steplike formation (16a) forming a shoulder for the branch (26b) of the static seal (26). The device is subjected to thermal sterilization, for example steam sterilization, and the steplike formation (16a) is made with a height (h) that, prior to thermal sterilization, is at least equal to 0.7 millimetres.

## Description

### Field of the invention

The invention relates to exchange devices for medical use and has been developed with particular attention paid to its possible application to dialysers.

Reference to said preferred field of application, which will be extensively considered in the sequel of the present description, is not, however, to be understood as in any sense limiting the scope of the invention. The invention can in fact find application also in other exchange devices for use in the biomedical field having a substantially similar structure, such as, for example, filters for blood plasma.

### Description of the related art

A disposable dialyser is a sterile medical device used in dialysis therapy for patients with chronic and acute renal dysfunctions, which is prearranged for extracorporeal circulation of blood and dialysis liquid (dialysate) .

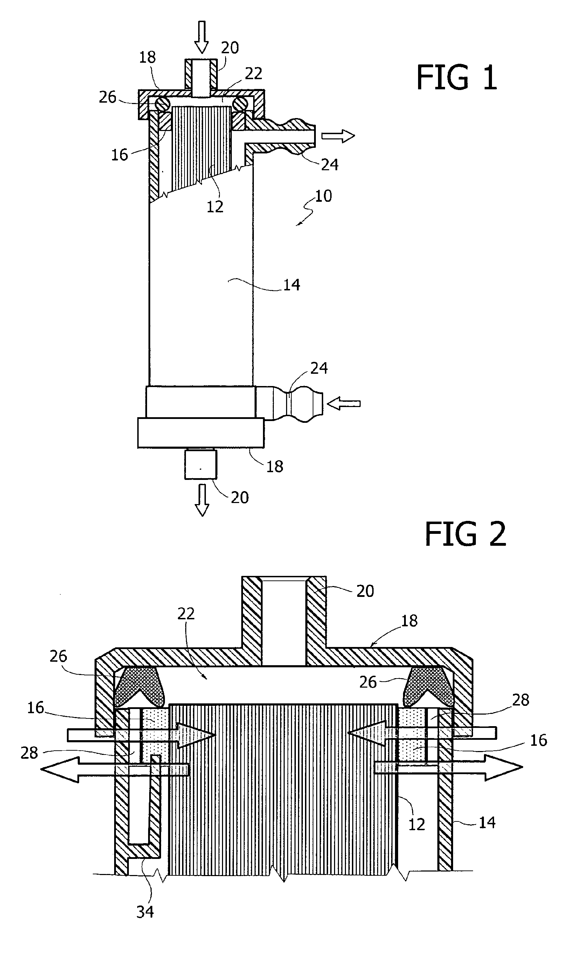

Figure 1 of the annexed sheets of drawings illustrates schematically, in a side view partially sectioned in an axial direction, the structure of a dialyser of a known type, basically corresponding to dialysers that have been sold for long under the commercial names of Rapido^{®} and Spiraflo^{®} by the present applicant and by other companies of the Sorin group.

Said device, designated as a whole by 10, is typically constituted by a certain number of components made of polymeric materials.

In particular, the function of exchange that lies at the basis of operation of the device (exchange of uraemic toxins between the blood and the dialysate, in the case of a dialyser) is entrusted to a more or less numerous bundle of hollow fibres 12 (from 5 000 to 12 000) typically constituted by membranes of cellulose derivation or of a synthetic type.

The fibres 12 are located in an outer shell (housing) 14 of a tubular shape made usually of polycarbonate.

At the ends of the bundle of fibres 12 and of the housing 14 two terminal blocks 16 are provided made of resin, such as polyurethane resin, embedded within which are the ends of the fibres 12. The masses of resin 16 (which, of course, are made so as to leave the cavities of the fibres 12 free) are commonly referred to as "potting" masses.

The housing 14 is sealed in the terminal parts of the haematic circuit defined by the cavities of the fibres 12 by two caps 18, which are usually also made of polycarbonate, provided with normalized blood ports 20 for the arterial and venous connections of the extracorporeal circuit.

The caps 18 define, together with the respective ends of the bundle of fibres 12 facing them, respective chambers for inflow/outflow of the blood 22 (just one of these chambers may be clearly seen in the top part of Figure 1).

At one end of the dialyser 10 - for example, the one illustrated at the top in Figure 1 - the blood undergoing treatment (for example, the blood coming from the patient undergoing dialysis) coming from the inlet connector 18 (arterial line) flows into the corresponding chamber 22 and, from here, is fed towards the cavities of the fibres 12..

At the opposite end of the dialyser 10 - in the case exemplified, the one illustrated at the bottom in Figure 1 - the blood which, having completed the path of flow along the cavities of the fibres, comes out from the bundle 12, is collected in the corresponding chamber 22. From here the blood that has undergone treatment exits from the dialyser 10 through the respective outlet connector 18 (venous line).

The blood which is to undergo treatment is thus made to circulate within the semipermeable membrane hollow fibres 12 (these fibres substantially defining the blood compartment of the dialyser). On the outside of the fibres 12 (dialysis compartment), the dialysis bath (dialysate) is instead made to circulate - usually with an opposite direction of flow with respect to that of the blood, as may be seen from the direction of the arrows appearing in Figure 1. For this purpose, the dialysis bath is introduced into the housing 14 and then taken from the housing 14 itself through respective inlet and outlet connectors 24.

The exchange of uraemic toxins between the blood and the dialysate occurs thus through the porous membrane of the fibres 12.

What has been said above corresponds to structural characteristics and to criteria of operation altogether known in the art and hence such as not to require any description in greater detail herein. This applies also to the further elements (circulation pumps, etc. - not illustrated herein), which, associated to a dialyser, constitute an apparatus for dialysis.

From what has been said previously, it is evident that each of the potting masses (16, in Figure 1) performs three fundamental tasks.for the dialyser:
- it keeps the capillaries (i.e., the hollow fibres) of the bundle grouped together;
- it separates the blood compartment (i.e., the flow of blood) from the dialysis compartment (i.e., the flow of dialysis liquid); and
- it offers the surface of contact, at inlet, to the blood coming from the arterial line and, at outlet, to the blood directed towards the venous line.

For this reason, there is usually envisaged the presence of a seal, such as an elastomeric O-ring 26, which, kept under pressure by the cap 18, performs an action of containment of the blood flow in order to prevent any stagnation and leakage.

In addition, in order to improve the distribution of the dialysis liquid that circulates on the outside of the hollow fibres, the bundle of fibres 12 includes a certain number of filaments made of synthetic material, which have the task of maintaining the fibres themselves separated from one another, thus improving the efficiency of the device. In this way, the entire outer surface of each hollow fibre of the bundle is lapped by the dialysis liquid and takes part in the exchange of toxins. The better distribution of the fibres consequently results in a considerable increase in the efficiency of the device.

### Object and summary of the invention

With the introduction of the fibres of a synthetic type (e.g., polysulphones - polyethersulphones or PES), constituted by capillaries with walls considerably thicker than traditional cellulose membranes, the filling coefficients (ratio between the volume occupied by the fibres and the volume of polyurethane) of the ends of the dialysers are higher, and consequently the polyurethane block must interact with a considerable mass of incorporated material and simultaneously preserve good qualities of elasticity and adhesiveness.

During the processes of fabrication and sterilization and during use of the device, the latter is subjected to forces of a mechanical and thermal type that apply to the structure thereof stresses which may be of considerable intensity. The forces involved concentrate in the ends of the device, where materials that present different behaviours in regard to the action of heat and stresses are intimately bound to one another.

In particular, the steam-sterilization process, which entails considerable variations in temperature (usually from room temperature to approximately 121°C), causes expansions and contractions of materials with coefficients of thermal expansion that are markedly different from one another. The surface of adhesion of the potting to the internal walls of the housing constitutes a constraint that induces stresses that are such as to cause strains and yielding of the system. The pressures within the blood ports during use further stress the already stressed material, with consequent risks of loss of fluid tightness between the various compartments of the device.

In addition, as has already been mentioned previously, in the bundle of hollow fibres there is arranged a certain number of spacing threads, which enable the fibres themselves to be kept separated. The use, in certain applications, of particular bundles containing a large number of spacing threads as described above distributed in a particular way, renders the potting extremely sensitive to the variations in temperature to which the device is subject during steam sterilization. This sensitivity, which in general manifests itself in the form of more or less accentuated contractions of the polyurethane resin that englobes the ends of the bundle, can have an adverse effect upon the internal tightness of the O-ring, which works directly in contact with the potting itself.

The object of the present invention is hence to take into account these negative factors and to counteract onset of the conditions of instability referred to previously.

According to the invention, the above object is achieved thanks to a process having the characteristics recalled in Claim 1. Advantageous developments of the invention form the subject of the dependent claims. The invention also relates to a corresponding exchange device for medical use.

The claims form an integral part of the technical teaching provided herein in relation to the invention.

In summary, in the currently preferred embodiments, the solution described herein is founded on the choice, for the seal provided in the end areas of the device, of a particular sectional profile. This profile comprises an inner lip, which co-operates with a step-like shoulder provided on the boundary of the potting mass. In order to ensure proper positioning of the inner lip of the O-ring, the step-like shoulder is made with a height, measured prior to the steam-sterilization treatment, of not less than 0.7 mm.

This characteristic is preferably associated, in countering the negative phenomena described previously (and accentuated by the use of exchange fibres with high coefficient of thermal expansion), with the presence, in the bundle of fibres, of a certain number of filaments made of synthetic material (for example, polyethylene terephthalate), which separate the fibres themselves, these filaments being traditionally used for obtaining a better distribution of the fibres and improving the distribution of the dialysis liquid that circulates on the outside of the hollow fibres.

Furthermore, the potting is at least partially "released" from the housing, thus countering adhesion of the potting to the housing. In this way, it is possible to render the structure of the end of the device less rigid and consequently more adaptable to the different thermal and mechanical conditions that are created during sterilization, ageing and use of the device itself. In particular, by introducing an anti-adherent medium (for example, an annular diaphragm made of polyolefin, such as polyethylene or polypropylene) in the ends of the housing, the polyurethane poured in the next step of production thereof is prevented from adhering to the housing, and the potting is allowed to maintain a (limited) possibility of movement with respect to the housing itself. In a preferred way, the potting is connected to the housing only through a series of tabs arranged radially, which are obtained during moulding of the housing itself, and the action of fluid tightness in regard to the dialysis bath is performed by a seal (0-ring).

### Brief description of the annexed drawings

The invention will now be described, purely by way of non-limiting example, with reference to the annexed drawings, in which:
- Figure 1 has already been described previously;
- Figure 2 is a schematic view in axial cross section of one end of an exchange device as described in the following; and
- Figure 3 is a view in greater detail of part of the elements illustrated in Figure 2; for this purpose Figure 3 is reproduced at an enlarged scale and illustrates in greater detail the effective possible appearance of some of the elements presented, with particular reference to the process of fabrication described herein.

### Detailed description of an exemplary embodiment of the invention

In the following, a detailed description of an exemplary embodiment of the invention considered herein is provided.

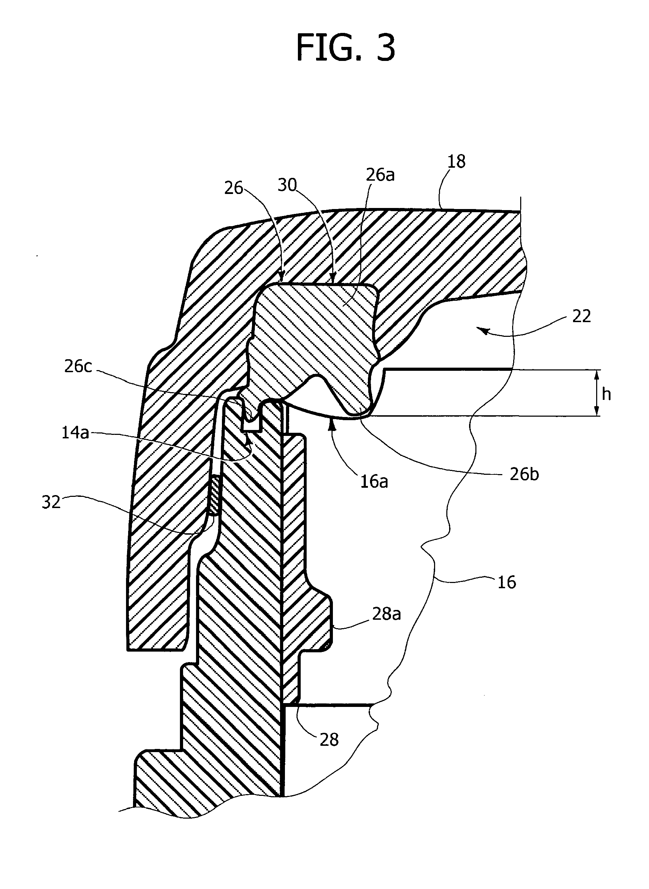

For reasons of brevity, where not otherwise indicated, it will be assumed that the exchange device described in what follows presents the general characteristics already illustrated with reference to Figure 1. For this reason, parts or elements that are as a whole identical or equivalent to parts or elements already described in relation to Figure 1 are designated in Figures 2 and 3 with the same reference numbers as the ones used in Figure 1.

Figure 2 shows schematically the position of the various components in one of the two ends of an exchange device for medical use (such as a dialyser), which, as has already been mentioned previously, basically comprises:
- a bundle of hollow exchange fibres 12, which extend between opposite ends of the aforesaid bundle;
- a housing 14 (closed at the ends by the caps 18), which receives the hollow fibres 12, thus defining a first path of flow for a first fluid (the blood) within the cavities of the fibres 12 and a second path of flow for a second fluid (the dialysate) on the outside of the fibres 12;
- at at least one end (and usually at both ends) of the bundle of fibres 12, a potting mass 16, which incorporates the respective end of the bundle of fibres 12 (obviously without obstructing the cavities) and co-operates with the housing 14 for separating from one another in a fluid-tight manner the first path of flow of the first fluid (i.e., the blood compartment) and the second path of flow of the second fluid (i.e., the dialysis compartment); and
- a seal (O-ring) 26, which co-operates with the potting mass 16 and with the housing 14 in order to keep the blood compartment and the dialysis compartment better separated and, in general, improve the fluid tightness of the device 10.

As is known to those of skill in the art, during the step of production of the device 10, two ends made of polypropylene are inserted into the ends of the body of the housing 14 and function so as to contain the polyurethane liquid poured into the ends of the device. The ends are eliminated only when the polyurethane has completed its process of solidification and hence act as "mould" for the potting 16, which assumes the shape thereof. The dialyser is then completed with the application of the caps 18.

The solution described herein envisages that set between the potting mass 16 and the portion of the inner surface of the wall of the housing 14 facing the potting mass 16 itself is an anti-adherent medium, constituted, for example, by an annular body or ring 28, preferentially made of polyolefin (typically selected from polyethylene and polypropylene).

The ring 28 is inserted within the housing 14 prior to proceeding to pouring of the potting 16 and preferentially has a sculptured feature, such as a groove or a ribbing 28a, which is designed to provide, together with the potting 16, once the latter is solidified, a shape fit, i.e., an anchorage, such as to prevent relative axial sliding between the ring 28 and the potting 16.

It will also be appreciated that, even though the ring 28 is substantially coextensive with the potting 16 in an axial direction with respect to the device 10, it usually has a height, i.e., a dimension in an axial direction, slightly smaller than the homologous dimension of the potting 16. The latter dimension cannot be constant seeing that the faces of the potting masses 16 facing the inside of the device 10 are usually curved as a result of the centrifugation to which the device is subjected during solidification of the potting 16 itself.

Thanks to the introduction of the ring 28 functioning as anti-adherent medium, the block of polyurethane of the potting 16 does not adhere to the inner surface of the housing 14 of the dialyser. In this way, it is possible to "release" the potting 16 at least partially from the housing 14 and render the structure of the end of the device less rigid and consequently more adaptable to the different thermal and mechanical conditions that are created during sterilization, ageing and use of the device itself.

In any case, the action of fluid tightness between the blood compartment and the dialysis compartment is ensured by the O-ring 26, for example made of silicone.

In the currently preferred embodiment, the cross-sectional profile of the O-ring 26 is basically forked.

In the profile of the O-ring 26 one may hence distinguish:
- a base part 26a, illustrated in the top position in Figures 2 and 3 and housed in a seat 30 made on the inner surface of the cap 18 welded (in 32) to the body of the housing 14;
- two branches 26b and 26c (facing downwards in Figures 2 and 3), which provide an action of double-lip seal, respectively in regard to the body of the housing 14 and in regard to the potting 16, setting itself, so to speak, "bestriding" or "spanning" the ring 28, which allows the potting 16 to maintain a limited possibility of movement with respect to the housing 14.

The branch or inner lip 26b has the function of keeping the blood in the blood compartment separate from the dialysis liquid (dialysate) in the dialysis compartment, whilst the branch or outer lip 26c prevents the dialysis liquid from flowing into the area comprised between the blood port 20 and the 0-ring 26 and prevents the dialysis liquid from coming out, which could be caused by possible discontinuities of the weld 32 between the cap 18 and the housing 14.

As may be seen in Figure 3, once solidification has occurred, the potting 16 has a peripheral formation 16a that forms a radiused step functioning as contrast shoulder for the lip or inner ring 26b of the O-ring 26.

Likewise, made on the distal edge of the end of the housing 14 (directly during moulding of the housing 14 itself) is an annular groove 14a, which forms an engagement seat for the lip or outer ring 26c of the O-ring 26.

Under the force to which the cap 18 is subjected during the step of welding to the housing 14, the outer lip 26c is pushed within the seat formed by the groove 14a, whilst the inner lip 26b is forced against the shoulder 16a and assumes the conformation shown in Figure 3, bending towards the inside of the device 10.

Any additional mechanical stress that might tend to compress the cap 18 towards the housing 14, and any increase in the pressure of the blood compartment (chamber 22) tend to accentuate the curvature of the inner lip 26b, which is thus made to adhere to a greater extent to the potting 16, increasing fluid tightness.

Consequently, the O-ring 26 operates in a relationship of thrust on the potting mass 16, and the action of thrust of the O-ring 26 is preferentially supported by the reaction in the opposite direction exerted by an array of tabs 34 that project radially in cantilever fashion from the internal wall of the housing 14 and have distal ends 34a immersed in the potting 16. These tabs, owing to their shape (preferably hook shape, as may be appreciated from Figure 2) and dimension, are sufficiently sturdy to support the end of the device 10, offering a good resistance in the direction of the buckling load. At the same time, the tabs 34 are somewhat elastic, hence elastically compliant, to adapt to the expansions and contractions in the radial direction (schematically represented by the arrows of Figure 2) due to the mechanical and thermal stresses.

To return to a consideration of the characteristics of the static seal or O-ring 26, it will be noted that the inner lip 26b works directly in contact with the potting 16 itself, co-operating with the shoulder 16a.

In order to ensure proper positioning of the inner lip 26b of the O-ring 26, the step 16a is provided, which functions as shoulder for the lip itself with a height h that, measured in the longitudinal/axial direction with respect to the bundle of fibres 12 - and before the steam-sterilization treatment, is not less that, hence at least equal to, 0.7 mm. Preferentially, the value of the height h is comprised between 0.7 mm and 1.3 mm, and in a particularly preferred way is approximately 1 mm. The aforesaid values must of course be interpreted taking into account the tolerances normally associated to their practical construction and measurement.

In this connection, it will be appreciated that the steplike formation/shoulder 16a is initially made with a rectangular profile, hence with a horizontal branch and a vertical branch, which are substantially rectilinear and orthogonal to one another. Figure 3 illustrates the appearance of the step/shoulder 16a, after the steam-sterilization treatment, i.e., when, following, upon the thermal and mechanical stresses and a certain "relaxation" over time of the potting mass 16, the branches of the step/shoulder 16a have assumed a general rounded profile in the direction of the convexity.

By adopting during fabrication of the device the measure described herein produces a resting surface of a shape and size that is sufficient to ensure maintenance of the proper positioning of the O-ring 26 even once sterilization has been completed . This applies in particular when the bundle 12 includes both fibres with a high coefficient of thermal expansion (contraction) and spacing filaments presenting a markedly different coefficient of expansion.

Of course, without prejudice to the principle of the invention, the details of construction and the embodiments may vary, even extensively, with respect to what is illustrated herein purely by way of non-limiting example, without thereby departing from the scope of the invention, as defined by the annexed claims. For example, the function of contrasting adhesion between potting and housing, which in the preferred embodiment described herein is performed by a polyolefin ring set between the potting and the housing, could be performed by another medium, such as an anti-adherent surface treatment of the potting and/or of the housing.

## Claims

1. A process for producing an exchange device (10) for medical use comprising the operations of:
- arranging a bundle of hollow exchange fibres (12) extending between opposite ends of said bundle in a housing (14) that defines a first flow path for a first fluid within said fibres (12) and a second flow path for a second fluid on the outside of said fibres (12);
- forming at least one potting mass (16) that incorporates a respective end of said bundle of fibres (12) and co-operates with said housing (14) for separating said first flow path and said second flow path from each other;
- associating to said at least one potting mass (16) a seal (26) having a branch (26b) co-operating with said at least one potting mass (16), said at least one potting mass (16) presenting a steplike formation (16a) forming a shoulder for said branch (26b) of said seal (26); and
- subjecting the device to thermal sterilization,
said process being **characterized in that** it comprises the operation of making said steplike formation (16a) with a height (h) that, prior to said thermal sterilization, is at least equal to 0.7 millimetres.

2. The process according to Claim 1, **characterized in that** it comprises the operation of making said steplike formation (16a) with a height (h) that, prior to said thermal sterilization, is comprised between 0.7 millimetres and 1.3 millimetres.

3. The process according to Claim 1, **characterized in that** it comprises the operation of making said steplike formation (16a) with a height (h) that, prior to said thermal sterilization, is substantially equal to 1 millimetre.

4. The process according to any of Claims 1 to 3, **characterized in that** it comprises the operation of using polysulphone or polyethersulphone fibres as said fibres (12) .

5. The process according to any of Claims 1 to 4, **characterized in that** it comprises the operation of inserting, in said bundle of fibres (12), filaments of synthetic material that separate the fibres (12) themselves.

6. The process according to any of the preceding claims, **characterized in that** it comprises the operation of making said branch (26b) of said seal (26) with a profile curved towards the inside of the device (10).

7. The process according to any of the preceding claims, **characterized in that** it comprises the operation of providing, in said seal (26), in addition to said branch (26b) co-operating with said steplike formation (16a) of at least one potting mass (16), an external branch (26c) co-operating with said housing (14).

8. The process according to any one of the preceding claims, **characterized in that** it comprises the operation of contrasting with an anti-adherent medium (28) the adhesion between said at least one potting mass (16) and said housing (14).

9. The process according to Claim 8, **characterized in that** said anti-adherent medium comprises a annular body (28) interposed between said potting mass (16) and said housing (14).

10. The process according to Claim 8 or Claim 9, **characterized in that** said anti-adherent medium (28) comprises a polyolefin, preferably selected out of the group constituted by polyethylene and polypropylene.

11. The process according to any one of Claims 8 to 10, **characterized in that** it comprises the operation of setting said seal (26) astride of said anti-adherent means (28) between said potting mass (16) and said housing (14).

12. The process according to any one of the preceding claims, **characterized in that** it comprises the operation of providing in said housing (14) reaction formations (34) acting on said potting mass (16) for contrasting the force of thrust exerted by said seal (26) on said potting mass (16).

13. The process according to Claim 12, **characterized in that** it comprises the operation of providing said reaction formations (34) in the form of tabs (34) extending into said potting mass (16) starting from said housing (14).

14. The process according to Claim 12 or Claim 13, **characterized in that** it comprises the operation of providing said reaction formations (34) as elastically resilient formations.

15. An exchange device (10) for medical use made using the process according to any one of the preceding claims.

16. The device according to Claim 15, in the form of dialyser for haemodialysis.
